# EUROPEAN PATENT SPECIFICATION

(11) **EP 2 677 814 B1**
(45) Date of publication and mention of the grant of the patent: **18.05.2016**
(21) Application number: 12290203.4
(22) Date of filing: 22.06.2012
(51) Int. Cl.: H04W 48/04

(54) **A small cell base station, and a method of controlling communications between a user terminal and a small cell base station**
Kleinzellige Basisstation und Verfahren zur Steuerung der Kommunikation zwischen einem Benutzerendgerät und einer kleinzelligen Basisstation
Station de base à petites cellules et procédé de contrôle des communications entre un terminal d'utilisateur et une station de base à petites cellules

(43) Date of publication of application: 25.12.2013
(73) Proprietor: ALCATEL LUCENT, 92100 Boulogne-Billancourt (FR)
(72) Inventor: Cherubini, Davide, Castelknock, Dublin 15 (IE); Pivit, Florian, Pelletstown Avenue, Dublin 15 (IE)
(74) Representative: Sarup, David Alexander

(56) References cited:
- WO-A1-02/25970
- US-A1- 2006 160 562
- US-A1- 2009 247 126
- US-A1- 2010 304 712
- US-A1- 2011 092 245
- US-B1- 6 907 254

## Description

### Field of the Invention

The present invention relates to telecommunications, in particular to wireless telecommunications.

### Description of the Related Art

Nowadays cellular wireless telecommunications to or from mobile user terminals are the most used form of telecommunications. The success of this technology is mainly due to its ubiquity, in that a connection can be made to or from almost anywhere.

However, there are scenarios where, in a certain area, wireless telecommunications are not allowed and so have to be blocked. This may be the case in, for example, examination rooms, conference rooms, classrooms, courtrooms and other areas, rooms or places. Blocking may be in order to suppress the exchange of information within the area or between inside the area and outside, or may be where the presence of cellular wireless terminals or equipment generate radio interference or other undesirable situations.

Use of radio jammers is a known way to seek to solve this problem. However, jammers block all kinds of wireless communication in the frequency range in which the jamming occurs, including emergency calls. This is contrary to legal regulations and is potentially dangerous.

Furthermore, a jamming signal interferes not only with the communication within the desired area but other areas nearby. Therefore jammers interfere with communications with users that it is not intended to block, such as people walking outside the dedicated area, for example outside a hospital treatment room or school examination hall.

United States Patent Application Publications US2010/0304712 and US2009/0247126 provide technical background.

It is known from US2010/0304712 to provide a method of controlling communications between a user terminal and a small cell base station, the method comprising:
sensing that the user terminal has entered the radio coverage area of the small cell base station;
receiving from the user terminal an identifier of the user terminal;
   and
denying requests for connection with user terminals identified in a record.

### Summary

The present invention is characterised over the disclosure of US2010/0304712 in that upon receiving the identifier, the user terminal is requested to provide an access control code to avoid the identifier being added to the record of identifiers of user terminals to be denied connections, and that identifier is added to the record of identifiers of user terminals to be denied connections upon the access code not being received within a given time.

The reader is referred to the appended independent claims. Some preferred features are laid out in the dependent claims.

In some embodiments, communications are controlled within a certain area, room or building by placing the small cell base station within the area, room or building so that the small cell base station provides coverage to this area.

In some embodiments, mobile communications with user terminals in selected areas are controlled in an efficient manner.

In some embodiments, denying a request for connection may be blocking a connection, for example of any type of call except for emergency calls.

A connection may be a call connection, for example a voice- and/or data-connection, for example a voice calls, data session, SMS message, or video stream.

In some embodiments, one or more small cell base stations are deployed in a restricted area within which mobile communications must be controlled. Accordingly, a list is created of SIM cards that are not allowed to start or receive a mobile communication, for example a call or data session.

In some embodiments, the list is created using sensors placed in the entrance(s) of a room, where the sensors are able to detect and register SIM details (for example International Mobile Subscriber Identity, IMSI). In some embodiments, the list is added to by the application of specific procedures when a user terminal attempts to connect to the small cell base station.

In some embodiments, the small cell base station is part of a network that includes macrocells, and all user terminals within the small cell are forced to connect to, or attempt to connect to, the small cell base station and so be controlled by the small cell base station.

In some embodiments, the list is an access control list for which specific policies are applied. In some embodiments the list may be subdivided dependent upon, for example, whether an access authorisation code is received from a user terminal, so that different policies are applied to each sub-list. For example, teachers in an examination hall who provide the correct key code may initiate data sessions even during an examination.

In some embodiments, both near-entrance sensors and the small cell base station itself are used to detect a new user terminal in the restricted area. This means users in an area where there is spill-out of signals beyond the intended restricted area, for example near windows outside a room, arc not restricted in call access.

Another example of the present invention is a small cell base station comprising means to sense that a user terminal has entered the radio coverage area of the small cell base station; means to receive from the user terminal an identifier of the user terminal; means to add the identifier to a record of identifiers of user terminals to be denied connections; and means to deny connection requests with user terminals identified in the record.

Some embodiments comprise means upon receiving the identifier to request an access control code within a given time to avoid the identifier being added to the record of identifiers of user terminals to be denied connections. Some embodiments comprise means configured to, upon the user terminal being detected as leaving or having left the coverage area of the small cell base station, remove the identifier of the user terminal from the record of user terminals to be denied connections.

### Brief Description of the Drawings

An embodiment of the present invention will now be described by way of example and with reference to the drawings, in which:
Figure 1 is a diagram illustrating a scenario in which a femtocell base station is used according to a first embodiment of the present invention.
Figure 2 is a diagram illustrating in more detail the femtocell base station and sensor gate shown in Figure 1,
Figure 3 is a flow diagram illustrating operation of the femtocell base station and sensor gate shown in Figure 2 in adding an identifier of a user terminal to a list of blocked users,
Figure 4 is a flow diagram illustrating operation of the femtocell base station and sensor gate shown in Figure 2 in removing an identifier of a user terminal from the list of blocked users,
Figure 5 is a diagram illustrating a femtocell base station according to a second embodiment of the invention in which the femtocell base station identifies a user terminal to be blocked,
Figure 6 is a flow diagram illustrating operation of the femtocell base station shown in Figure 5 when there is no active call,
Figure 7 is a flow diagram illustrating operation of the femtocell base station shown in Figure 5 when there is an active call, and
Figure 8 is a diagram illustrating a femtocell base station according to a third embodiment of the invention.

### Detailed Description

The inventors realised that conventionally students keep using cellular mobile phones during class periods, usually in silent mode. Mobile phones are used at school to send SMS text messages, send answers to a classmate, receive answers from another classmate, use the Internet to retrieve information (in other words looking up answers), chat using Instant Messaging (IM) applications, take pictures or shoot video using the integrated camera. The inventors realised that in classroom or examination conditions, these acts may lie on a spectrum of undesirable behaviour between moderate class disruption and serious examination fraud.

The inventors found a useful counter-measure to prevent the use of mobile phones in classrooms, particularly during an examination, or in other places, for example, to prevent the exchange of information within a room, or between the room and outside. They developed an approach that is applicable to larger environments, such as a school or court building or a campus. The inventors provide an approach that enables teachers and administrators to enforce the ban on cellular mobile phones at school.

As will be described in detail below, the inventors realised that an identifier of a subscriber, specifically from the Subscriber Interface Module, SIM, for example the International Mobile Subscriber Identity, IMSI, may be detected and used to generate a list of user terminals to which access is restricted. The IMSIs may be determined using sensors or by a femtocell base station, as described below. The list may be stored on the femtocell base station together with an associated policy or policies to be applied. For example, a default policy may be: no outgoing calls, no incoming calls, allow emergency calls.

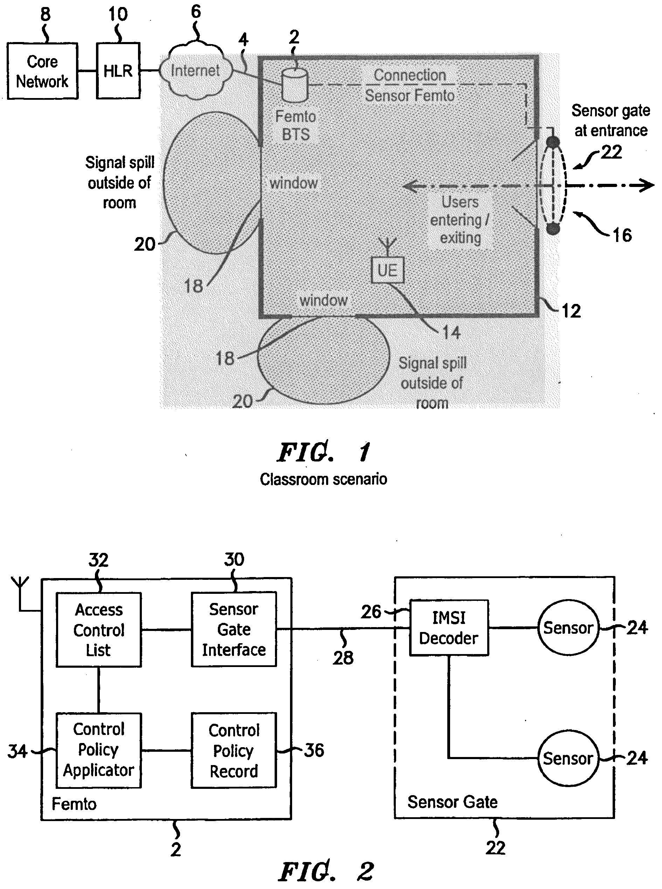

As shown in Figure 1, a femtocell base station 2 for wireless telecommunications is provided including a Digital Subscriber Line, DSL, backhaul link 4 for connection over the Internet 6 to a mobile operator's core network 8 of known type via a Home Location Register, HLR, 10 of known type. The inventors realised that a user terminal 14 will seek to connect to the base station providing the strongest signal, for example the femtocell base station 2 in a classroom 12 in which the user terminal 14 is. The inventors realised that the base station 2 will "hook up", in other words connect to, the user terminal 14, and using the IMSI as a key to a Home Location Register, HLR 10, of known type, the user terminal may be authenticated and authorised to connect to a mobile operator's core network 8.

As shown in Figure 1, the classroom 12 includes an entrance 16 and two windows 18. There is a signal spillout area 20 outside of the room 12 through each window 18. There is a sensor gate 22 across the entrance 16. The sensor gate 22 is connected to the femtocell base station 2.

As shown in Figure 2, the sensor gate 22 includes two sensors 24 connected to an International Mobile Subscriber Identity (IMSI) decoder 26. In use a person entering or leaving the classroom 12 via the entrance 16 passes between the two sensors 24. The sensors 24 are of known type, having ranges of tens of centimetres to metres. Each sensor 24 can detect a mobile user terminal that is brought near and cause the user terminal to provide its IMSI to the sensor, from where the IMSI is forwarded to the IMSI decoder 26.

In this example, the femtocell base station 2 is connected to the sensor gate 22 via a wired connection cable 28 according to a standard protocol. In some otherwise similar alternative embodiments (not shown) the connection between sensor gate and femtocell base station is a wireless connection, for example in accordance with the Zigbee or Bluetooth interface or using a wireless Universal Signal Bus (USB) connection.

As shown in Figure 2, the IMSI decoder 26 of the sensor gate 22 is connected via cable 28 to a sensor-gate-interface 30 in the femtocell base station 2. The interface 30 is connected to memory 32 containing an access control list. The memory 32 is connected to a control policy applicator 34 which is also connected to a control policy record 36.

### IMSI collection and access control list creation

In this example, the IMSI of each user terminal entering the classroom 12 is detected by the sensor gate 22. Use of the sensor gate means that only user terminals detected by the sensor are put on the access control list. In alternative examples that will be described later, IMSIs are detected by the femtocell base station instead, or by a combination of the sensor gate and the femtocell base station.

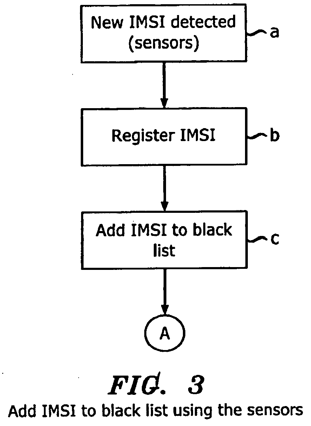

Returning to the example shown in Figures 1 and 2, as shown in Figure 3, a user terminal 14 entering the classroom 12 is detected (step a) by at least one of the sensors 24 causing decoding (step b) of the IMSI in a signal received from the user terminal by the IMSI decoder 26. The decoded IMSI is passed via the cable 28 and interface 30 to the memory 32 where that IMSI is added (step c) to a list of user terminals (an "access control list").

### Applying the access control list to block calls

The control policy record 36 provides the access control policies to be applied to the user terminals identified on the list. These policies are applied by a control policy applicator 34 to user terminals listed on the access control list.

In use, upon receiving a call setup request, the control policy applicator 34 in the femtocell base station 2 accesses the access control list in the memory 32 to check whether a user terminal in the femtocell is one to which the access control policies should be applied.

In this example, the control policies are to deny requests to setup calls, except for emergency calls, from or to user terminals whose IMSIs are currently on the access control list in the memory 32. User terminals in the classroom 12 are blocked from making or receiving non-emergency calls, including data sessions.

### Removing an IMSI from the access control list

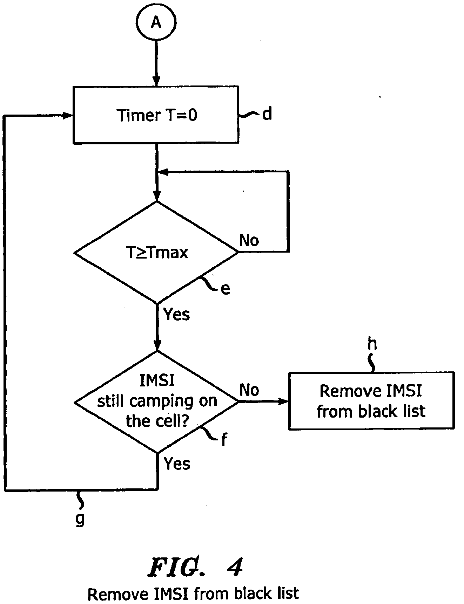

As shown in Figure 4, upon a user terminal's IMSI being added to the access control list, an associated timer T is started (step d). When the given timeout period Tmax is reached (step e) by the timer, the femtocell base station 2 checks (step f) whether or not that user terminal is still connected. If yes, the timer is restarted (step g). If No, that user terminal's IMSI is removed from the access control list.

### Agreements between mobile network operators

Traditionally, any particular user terminal may only connect to base stations of mobile network operator to which the user terminal subscribes, and a user terminal associated with a first operator is not allowed to connect to a base station of a different mobile operator.

However, in this embodiment a so-called roaming agreement is set up so that user terminals of any operator that is party to the agreement are also able to connect to a base station of another operator who is party to the agreement. Specifically the femtocell base station 2 is in a restricted area where the roaming agreement applies such that user terminals of any operator, upon entry to the classroom, are placed on the access control list for call blocking purposes.

### Allowing some users

In some otherwise similar examples, rather than blocking calls in respect of all users in the classroom, a certain group of user terminals within the classroom retain access so can make calls freely. The group may be user terminals of security staff and teachers, for example. In one example upon a user terminal being detected, for example by the sensor gate (or femtocell base station), a security code known only to a user who is a member of staff can be requested. The member of staff who responds with the keycode avoid the IMSI of his user terminal being added to the access control list.

In another example, the femtocell base station is programmed with a list of user terminals whose IMSIs are not to be included on the access control list of users who can only make/receive emergency calls, but are noted in a list of IMSIs of user terminals who are allowed full access to make and receive calls when in the classroom.

### An alternative: IMSI detection by the femtocell base station

In a further example, the IMSI of a user terminal is detected by a femtocell base station 2' instead of by a sensor gate. Use of the femtocell base station to detect user terminals to put on the access control list is more secure than relying on a sensor gate only. This is because bypassing a sensor, for example by smuggling the user terminal in via a window, would not avoid access control.

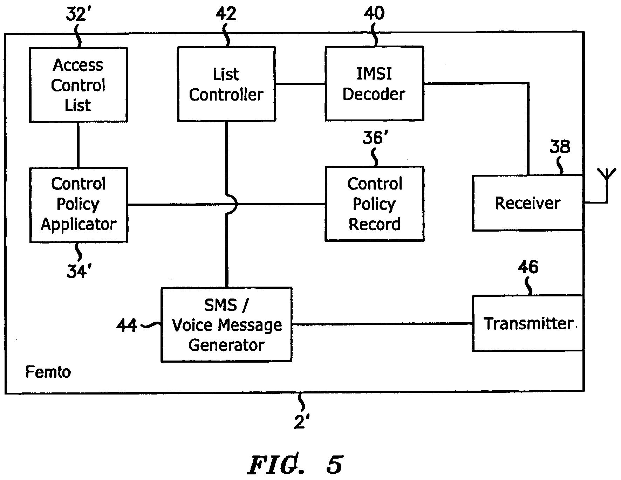

As shown in Figure 5, in this example, the femtocell base station 2' includes a radio receiver 38 connected to an IMSI decoder 40 in the femtocell base station 2'. The IMSI decoder 40 is connected to a memory 32' storing an access control listvia a list controller 42. The memory 32' is connected to a control policy applicator 34' which is also connected to a control policy record 36'. The list controller 42 is also connected to an SMS/voice message generator 44 that is connected to a transmitter 46.

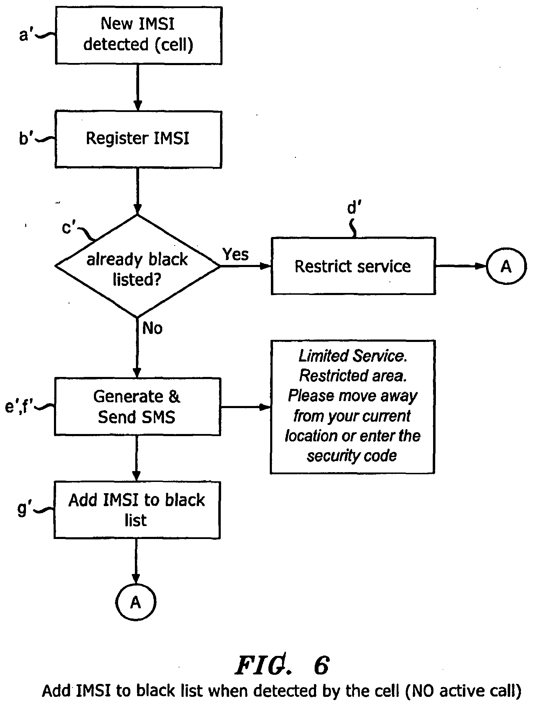

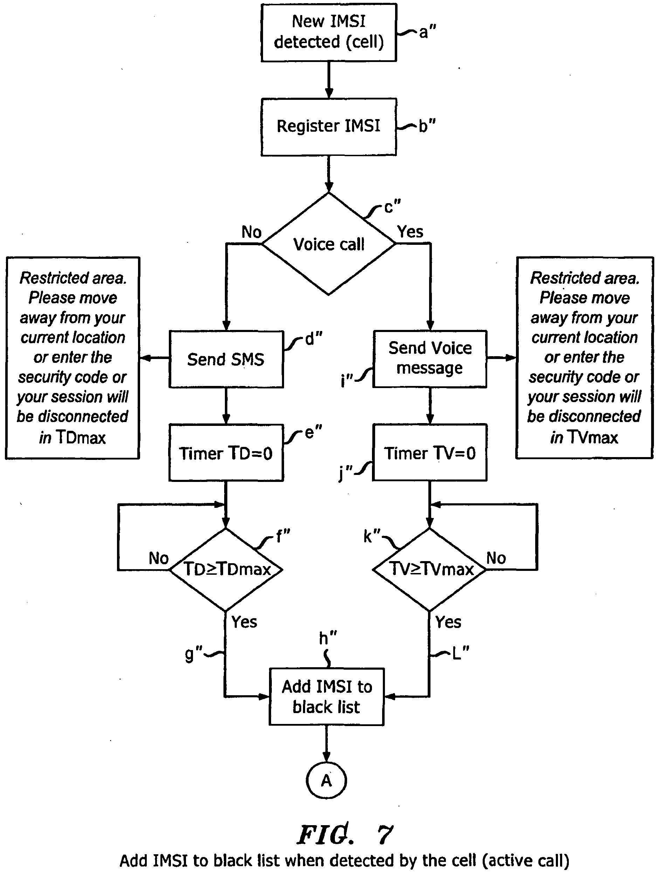

Operation in this example is illustrated in Figures 6 and 7.

No active call: As shown in Figure 6, in the case where the detected user terminal is not in an active call, the IMSI decoder 40 of femtocell base station 2' detects (step a') an IMSI, causing that decoded IMSI to be registered (step b')by a list controller 42. The IMSI may be provided to the femtocell base station 2' for example upon entering the classroom or upon the user terminal being rebooted inside the classroom. In the list controller 42 a query is made (step c') of the memory 32 to determine whether that IMSI is already included in the access control list.

If Yes, the list controller 42 instructs the control policy applicator 34' to restrict access (step d') in accordance with the control policy in the record 36'.

If No, the list controller 42 triggers the SMS generator to automatically generate (step e') a Short Message Service, SMS, text message that reads: "Limited Service Restricted Area. Please move away from your current location or enter a security code." The SMS message is transmitted (step f) to the user terminal by the transmitter 46. The IMSI is then added (step g') to the access control list in the memory 32' in the femtocell base station 2'. This enables, a user terminal outside the classroom 2 in a spillout area 20 to move a few metres and so avoid being unable to make or receive calls.

Although not shown in detail in Figure 6, should the correct security code be entered, the user terminal is not placed on the access control list, but on a list (not shown) in the femtocell base station of user terminals that are allowed access.

Active call: As shown in Figure 7, in the case where the detected user terminal is in an active call, the IMSI decoder 40 of femtocell base station 2' detects (step a") an IMSI, causing that decoded IMSI to be registered (step b") by a list controller 42. The IMSI may be provided to the femtocell base station 2' for example upon the user terminal in a call entering the classroom.

The list controller 42 determines (step c") whether or not the active call is a voice call (rather than a data session).

If No, the list controller instructs the SMS/voice message generator 44 to send, via transmitter 46, an SMS text message which reads "Restricted area- Please move away from your current location or enter the security code, else your session will be disconnected in TDmax." Of course, TDmax is specified in the message as a number of seconds, say 15 seconds for example. This message is sent (step d") and in the list controller 42 a timer is started(step e", step f"). Upon the timeout period TDmax being reached (step g") without the user terminal being detected as moving out of the femtocell nor without the security code being successfully received and processed, then the IMSI is added (step h") to the access control list in the memory 32' in the femtocell base station 2'.

If at step c", the answer is Yes, namely the call is determined as being a voice call, then the list controller 42 sends (step i") via SMS/voice message generator 44 and the transmitter 46, a voice message. The voice message is an automatically generated voice message which states "Restricted area- Please move away from your current location or enter the security code, else your session will be disconnected in TVmax." TDmax is specified in the message as a number of seconds, say 15 seconds, for example. Upon the voice message being sent a timer is started(step j", k")in the list controller 42. Upon the timeout period TDmax being reached (step *l*") without the user terminal being detected as moving out of the femtocell nor without the security code being successfully received and processed, then the IMSI is added (step h") to the access control list in the memory 32' in the femtocell base station 2'. The voice message is a short pre-recorded message which temporarily interrupts the call conversation.

In a similar embodiment a web-based pop-up message may be provided to the user terminal in place of the SMS text message.

Use of the femtocell base station to detect user terminals to put on the access control list is more secure than relying on the sensor gate only as bypassing a sensor, for example by smuggling the user terminal in via a window, would not avoid access control. However, the femtocell base station may put onto the access control list, a user terminal within the femocell but outside the classroom, namely in the spillout area near a window. This may be undesirable in some circumstances.

### Another alternative: IMSI detection by the femtocell base station and sensor gate in combination

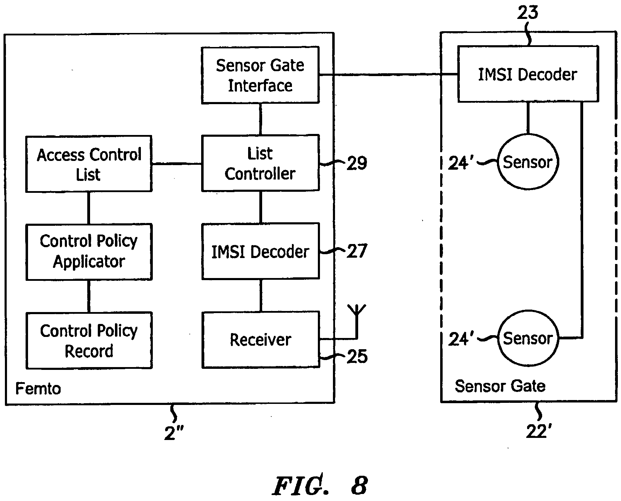

As shown in Figure 8, depending on the level of security required and how desirable it is to avoid users outside of the classroom, or other intended area, from being blocked, both the small cell base station and a sensor gate may be used to determine IMSIs of user terminals to be added to an access control list. This ensures that only user terminals that have passed through the sensor gate and are connected to the femtocell base station are blocked. User terminals that are connected to the femtocell base station but have not passed the sensor gate, so are outside the room, are not blocked.

As shown in Figure 8, the sensors 24' of the sensor gate 22' are connected via an IMSI decoder 23 located in the sensor gate. The femtocell base station 2" includes a receiver 25 connected to an IMSI decoder 27 in the femtocell base station 2". A list controller 29 receives input from both IMSI decoders 23,27 to determine whether an IMSI detected by both sensor gate 22' and femtocell base station 2' should be added to the access control list. Only if the IMSI in question is detected in both ways at a similar time, is the IMSI added to the access control list.

In this example, in summary, an IMSI is only added to the access control list, and hence calls of the corresponding user terminal blocked where both (a) the user terminal is connected to the femtocell base station and (b) the IMSI of the user terminal has been detected by the sensors.

The present invention may be embodied in other specific forms without departing from its essential characteristics. For example, in an otherwise similar embodiment to that described above involving roaming agreements for a femtocell base station, a multi-operator femtocell base station of known type is used instead, having an access control list in which user terminals of any operator may be listed (for application of access control polices).

In some embodiments various types of access control policies may be applied; for example emergency calls only, or data sessions and emergency calls only.

In some embodiments multiple access control policies may be applied, for example no calls except emergency calls from students, but data calls being allowed for teachers at examination time who have replied with the correct key-code.

The described embodiments are to be considered in all respects only as illustrative and not restrictive. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine or computer readable and encode machinc-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of controlling communications between a user terminal (14) and a small cell base station (2'), the method comprising:
sensing (Fig 6:a', Fig 7:a") that the user terminal has entered the radio coverage area of the small cell base station;
receiving (b',b") from the user terminal an identifier of the user terminal; and
denying requests for connection with user terminals identified in a record (32');
**characterised in that**
upon receiving the identifier, the user terminal is requested (Fig 6:e',f', Fig 7:d",i") to provide an access control code to avoid the identifier being added to the record of identifiers of user terminals to be denied connections, and that identifier is added (g',h") to the record of identifiers of user terminals to be denied connections upon the access code not being received within a given time.

2. A method according to claim 1, in which communications are controlled within a room (12) or restricted area by locating the small cell base station (2) within the room or restricted area so that the small cell base station provides radio coverage to the room or restricted area.

3. A method according to claim 1 or claim 2, in which the user terminal (14) is sensed by at least one sensor (24) positioned at an entrance to a room or restricted area within which the small cell base station is located.

4. A method according to claim 1 or claim 2, in which the user terminal is sensed by the small cell base station (2).

5. A method according to claim 1 or claim 2, in which the user terminal (4) is considered sensed upon both being sensed by at least one sensor (24) positioned at an entrance to a room or restricted area within which the small cell base station is located, and being sensed by the small cell base station (2) in the room or restricted area.

6. A method according to any preceding claim, in which the request to provide the access code is sent (e',f',d") by Short Message Service, SMS, text message.

7. A method according to any of claims 1 to 6 in which the request to provide the access code is sent (i") by automated voice message, and the user terminal is in an active mode voice connection.

8. A method according to any preceding claim, in which upon the user terminal (14) being detected as leaving or having left the coverage area of the small cell base station, the identifier of the user terminal is removed (Fig 4:h) from the record of user terminals to be denied connections.

9. A method according to any preceding claim, in which the connection is denied (34',36') according to a given access control policy.

10. A method according to any preceding claim, in which requests for connection with user terminals identified in the record are denied except for emergency call requests.

11. A small cell base station (2') comprising:
means to sense (24) that a user terminal has entered the radio coverage area of the small cell base station;
means to receive (38,40) from the user terminal an identifier of the user terminal; and
means to deny requests for connection with user terminals identified in a record (32').
**characterised by** means to request (42,44) the user terminal to provide an access control code to avoid the identifier being added to the record of identifiers of user terminals to be denied connections,
means to add (42) the identifier to the record (32') of identifiers of user terminals to be denied connections upon the access code not being received within a given time;

12. A small cell base station according to claim 11, in which the means to sense comprises at least one remote sensor (24) positioned at an entrance to a room (12) or other restricted area within which a main body of the small cell base station (2) is located, said at least one sensor being configured to sense the user terminal when the user terminal is carried through the entrance.

13. A small cell base station according to claim 11, in which the means to sense is configured to sense the user terminal by receiving a control signalling message from the user terminal.

14. A small cell base station according to claim 11, in which the means to sense comprises both at least one remote sensor (24) positioned at an entrance to a room or other restricted area within which a main body of the small cell base station is located and further means to sense in the main body of the small cell base station (2) by receiving a control signalling message from the user terminal; in which in use the base station considers a user terminal to be sensed upon the user terminal being sensed by both said at least one remote sensor and said further means.

## Patentansprüche

1. Verfahren zur Steuerung von Kommunikationen zwischen einem Benutzerendgerät (14) und einer kleinzelligen Basisstation (2'), wobei das Verfahren umfasst:
das Erfassen (Fig 6: a', Fig. 7: a"), dass ein Benutzerendgerät in den Funkabdeckungsbereich der kleinzelligen Basisstation eingetreten ist;
das Empfangen (b', b") einer Kennung des Benutzerendgeräts durch das Benutzerendgerät;
und
das Verweigern von Verbindungsanfragen für Benutzerendgeräte, die in einem Datensatz (32') geführt werden;
**dadurch gekennzeichnet, dass**
auf den Empfang der Kennung hin das Benutzerendgerät aufgefordert (Fig. 6: e', f, Fig. 7: d", i") wird, einen Zugangssteuerungscode zur Verfügung zu stellen, um zu verhindern, dass die Kennung zum Datensatz mit Kennungen solcher Benutzerendgeräte hinzugefügt wird, denen die Verbindung zu verweigern ist, sowie dass die Kennung zum Datensatz mit Kennungen solcher Benutzerendgeräte hinzugefügt (g', h") wird, denen die Verbindung zu verweigern ist, nachdem der Zugangscode nicht im Verlauf eines vorgegebenen Zeitraums empfangen wird.

2. Verfahren nach Anspruch 1, wobei die Kommunikationen innerhalb eines Raums (12) oder begrenzten Bereichs durch das Lokalisieren der kleinzelligen Basisstation (2) innerhalb des Raums oder begrenzten Bereichs gesteuert werden dergestalt dass die kleinzellige Basisstation für den Raum oder begrenzten Bereich Funkabdeckung zur Verfügung stellt.

3. Verfahren nach Anspruch 1 oder 2, wobei das Benutzerendgerät (14) von mindestens einem Sensor (24) erfasst wird, der an einem Zugang zu einem Raum oder begrenzten Bereich positioniert ist, in welchem sich die kleinzellige Basisstation befindet.

4. Verfahren nach Anspruch 1 oder 2, wobei das Benutzerendgerät von der kleinzellige Basisstation (2) erfasst wird.

5. Verfahren nach Anspruch 1 oder 2, wobei das Benutzerendgerät (4) als erfasst gilt, wenn es von mindestens einem Sensor (24) erfasst wird, der an einem Zugang zu einem Raum oder begrenzten Bereich positioniert ist, in weichem sich die kleinzellige Basisstation befindet, und wenn es von der kleinzelligen Basisstation (2) in dem Raum oder begrenzten Bereich erfasst wird.

6. Verfahren nach einem jeglichem der vorgenannten Ansprüche, wobei die Anfrage für das Zurverfügungstellen des Zugangscodes anhand einer Textnachricht über einen Kurznachrichtendienst (Short Message Service, SMS) gesendet (e', f', d") wird.

7. Verfahren nach einem jeglichen der Ansprüche 1 bis 6, wobei die Anfrage für das Zurverfügungstellen des Zugangscodes per automatisierter Sprachnachricht gesendet (i") wird und das Benutzerendgerät sich in einer Sprechverbindung im Aktivmodus befindet.

8. Verfahren nach einem jeglichem der vorgenannten Ansprüche, wobei dann, wenn das Benutzerendgerät (14) als den Abdeckungsbereich der kleinzelligen Basisstation verlassend oder verlassen habend erfasst wird, die Kennung des Benutzerendgeräts aus dem Datensatz mit solchen Benutzerendgeräten entfernt (Fig. 4: h) wird, denen Verbindungen zu verweigern sind.

9. Verfahren nach einem jeglichem der vorgenannten Ansprüche, wobei die Verbindung gemäß einer vorgegebenen Zugangssteuerungsrichtlinie verweigert (34', 36') wird.

10. Verfahren nach einem jeglichem der vorgenannten Ansprüche, wobei Verbindungsanfragen für in einem Datensatz geführte Benutzerendgeräte verweigert werden, ausgenommen Anfragen für Notrufe.

11. Kleinzellige Basisstation (2'), umfassend:
Mittel für das Erfassen (24), dass ein Benutzerendgerät in den Funkabdeckungsbereich der kleinzelligen Basisstation eingetreten ist;
Mittel für das Empfangen (38, 40) einer Kennung des Benutzerendgeräts durch das Benutzerendgerät; und
Mittel für das Verweigern von Verbindungsanfragen für Benutzerendgeräte, die in einem Datensatz (32') geführt werden.
Gekenntzeichnet durch Mittel, um das Benutzerendgerät aufzufordern (42, 44) einen Zugangssteuerungscode zur Verfügung zu stellen, um zu verhindern, dass die Kennung dem Datensatz von Kennungen solcher Benutzerendgeräte hinzugefügt wird, denen die Verbindung zu verweigern ist;
Mittel für das Hinzufügen (42) der Kennung zu dem Datensatz (32') mit Kennungen von Benutzerendgeräten, denen die Verbindung zu verweigern ist, nachdem der Zugangscode nicht im Verlauf eines vorgegebenen Zeitraums empfangen wird;

12. Kleinzellige Basisstation nach Anspruch 11, wobei die Mittel für das Erfassen mindestens einen entfernten Sensor (24) umfassend, der am Zugang zu einem Raum (12) oder begrenzten Bereich positioniert ist, in welchem sich ein Hauptteil der kleinzelligen Basisstation (2) befindet, wobei besagter mindesten eine Sensor konfiguriert ist für das Erfassen des Benutzerendgeräts, wenn das Benutzerendgerät durch den Eingang getragen wird.

13. Kleinzellige Basistation nach Anspruch 11, wobei die Mittel für das Erfassen für das Erfassen des Benutzerendgeräts durch den Empfang einer Steuorsignalisierungsnachricht des Benutzerendgeräts konfiguriert sind.

14. Kleinzellige Basisstation nach Anspruch 11, wobei die Mittel für das Erfassen sowohl mindestens einen entfernten Sensor (24) umfassen, der am Zugang zu einem Raum oder begrenzten Bereich positioniert ist, in welchem sich ein Haupttell der kleinzelügen Basisstation befindet, als auch weitere Erfassungsmittel im Hauptteil der kleinzelligen Basisstation (2) für das Erfassen durch den Empfang einer Steuersignalisierungsnachricht von dem Benutzerendgerät; wobei die Basisstation im Betriebsmodus als zu erfassendes Benutzerendgerät ein solches Benutzerendgerät erachtet, welches sowohl von dem besagten, mindestens einen entfernten Sensor als auch von besagten weiteren Erfassungsmitteln erfasst wird.

## Revendications

1. Procédé de contrôle de communications entre un terminal d'utilisateur (14) et une station de base de petite cellule (2'), le procédé comprenant les étapes suivantes :
capter (figure 6 : a', figure 7 : a") que le terminal d'utilisateur est entré dans la zone de couverture radio de la station de base de petite cellule ;
recevoir (b', b") en provenance du terminal d'utilisateur un identificateur du terminal d'utilisateur ; et
refuser des demandes pour la connexion avec des terminaux d'utilisateurs identifiés dans un enregistrement (32') ;
**caractérisé en ce que**
lors de la réception de l'identificateur, il est demandé au terminal d'utilisateur (figure 6 : e', f', figure 7 : d", i") de fournir un code de contrôle d'accès afin d'éviter que l'identificateur soit ajouté à l'enregistrement d'identificateurs de terminaux d'utilisateurs devant se voir refuser les connexions, et cet identificateur est ajouté (g', h") à l'enregistrement d'identificateurs de terminaux d'utilisateurs devant se voir refuser les connexions lorsque le code d'accès n'est pas reçu dans un temps donné.

2. Procédé selon la revendication 1, dans lequel des communications sont contrôlées à l'intérieur d'une pièce (12) ou d'une zone d'accès restreint en localisant la station de base de petite cellule (2) à l'intérieur de la pièce ou de la zone d'accès restreint de sorte que la station de base de petite cellule fournisse une couverture radio à la pièce ou à la zone d'accès restreint.

3. Procédé selon la revendication 1 ou la revendication 2, dans lequel le terminal d'utilisateur (14) est capté par au moins un capteur (24) positionné au niveau d'une entrée d'une pièce ou d'une zone d'accès restreint à l'intérieur de laquelle la station de base de petite cellule est localisée.

4. Procédé selon la revendication 1 ou la revendication 2, dans lequel le terminal d'utilisateur est capté par la station de base de petite cellule (2).

5. Procédé selon la revendication 1 ou la revendication 2, dans lequel le terminal d'utïlisateur (4) est considéré comme capté lorsqu'il est à la fois capté par au moins un capteur (24) positionné au niveau d'une entrée d'une pièce ou d'une zone d'accès restreint à l'intérieur de laquelle la station de base de petite cellule est localisée, et capté par la station de base de petite cellule (2) dans la pièce ou la zone d'accès restreint.

6. Procédé selon l'une quelconque des revendications précédentes, dans lequel la demande de fournir le code d'accès est envoyée (e', f, d") par message texte de Service de messages courts, SMS,

7. Procédé selon l'une quelconque des revendications 1 à 6, dans lequel la demande de fournir le code d'accès est envoyée (i") par message vocal automatisé et le terminal d'utilisateur est dans une connexion vocale en mode actif.

8. Procédé selon l'une quelconque des revendications précédentes, dans lequel lorsque le terminal d'utilisateur (14) est détecté comme quittant ou ayant quitté la zone de couverture de la station de base de petite cellule, l'identificateur du terminal d'utilisateur est supprimé (figure 4 : h) de l'enregistrement de terminaux d'utilisateurs devant se voir refuser les connexions.

9. Procédé selon l'une quelconque des revendications précédentes, dans lequel la connexion est refusée (34', 36') conformément à une politique de contrôle d'accès donnée.

10. Procédé selon l'une quelconque des revendications précédentes, dans lequel les demandes pour la connexion avec des terminaux d'utilisateurs identifiés dans l'enregistrement sont refusées à l'exception des demandes d'appel d'urgence.

11. Station de base de petite cellule (2') comprenant :
des moyens pour capter (24) qu'un terminal d'utilisateur est entré dans la zone de couverture radio de la station de base de petite cellule ;
des moyens pour recevoir (38,40) en provenance du terminal d'utilisateur un identificateur du terminal d'utilisateur ; et
des moyens pour refuser des demandes pour la connexion avec des terminaux d'utilisateurs identifiés dans un enregistrement (32'),
**caractérisée par** des moyens pour demander (42, 44) au terminal d'utilisateur de fournir un code de contrôle d'accès afin d'éviter que l'identificateur soit ajouté à l'enregistrement d'identificateurs de terminaux d'utilisateurs devant se voir refuser les connexions ;
des moyens pour ajouter (42) l'identificateur à l'enregistrement (32') d'identificateurs de terminaux d'utilisateurs devant se voir refuser les connexions lorsque le code d'accès n'est pas reçu dans un temps donné.

12. Station de base de petite cellule selon la revendication 11, dans laquelle les moyens pour capter comprennent au moins un télécapteur (24) positionné au niveau d'une entrée d'une pièce (12) ou autre zone d'accès restreint à l'intérieur de laquelle un corps principal de la station de base de petite cellule (2) est localisé, ledit au moins un capteur étant configuré pour capter le terminal d'utilisateur lorsque le terminal d'utilisateur est porté en traversant l'entrée.

13. Station de base de petite cellule selon la revendication 11, dans laquelle les moyens pour capter sont configurés pour capter le terminal d'utilisateur en recevant un message de signalisation de contrôle en provenance du terminal d'utilisateur.

14. Station de base de petite cellule selon la revendication 11, dans laquelle les moyens pour capter comprennent à la fois au moins un télécapteur (24) positionné au niveau d'une entrée d'une pièce ou autre zone d'accès restreint à l'intérieur de laquelle un corps principal de la station de base de petite cellule est localisé et d'autres moyens pour capter dans le corps principal de la station de base de petite cellule (2) en recevant un message de signalisation de contrôle en provenance du terminal d'utilisateur ; dans laquelle, lors de l'utilisation, la station de base considère un terminal d'utilisateur comme étant capté lorsque le terminal d'utilisateur est capté à la fois par ledit au moins un télécapteur et lesdits autres moyens.
